# EUROPEAN PATENT APPLICATION

(11) **EP 2 874 340 A1**
(43) Date of publication of application: **20.05.2015**
(21) Application number: 13829164.6
(22) Date of filing: 19.06.2013
(51) Int. Cl.: H04L 5/14, H04B 7/06, H04B 7/08, H04B 7/14

(54) **COMMUNICATION DEVICE AND SPACE DIVISION DUPLEX METHOD THEREFOR**

(30) Priority: 16.08.2012 CN 201210292392
(71) Applicant: Huawei Technologies Co., Ltd., Longgang District Shenzhen, Guangdong 518129 (CN)
(72) Inventor: LIN, Huajiong, Shenzhen Guangdong 518129 (CN); LV, Linjun, Shenzhen Guangdong 518129 (CN)
(74) Representative: Haley, Stephen
(86) International application number: PCT/CN2013/077447
(87) International publication number: WO 2014/026501

(57) **Abstract**

The present application discloses a communication apparatus and a space division duplex method thereon The communication apparatus includes at least one first chain, at least one second chain, and at least two antennas that are mutually independent of the first chain and the second chain. The method includes the following steps: obtaining channel state information between the communication apparatus and a peer end; selecting, according to the channel state information and from the antennas, a first antenna corresponding to the first chain and a second antenna corresponding to the second chain; connecting the first chain to the first antenna, and connecting the second chain to the second antenna; and at a same time-frequency resource, transmitting a signal by using the first chain and the first antenna connected to the first chain and receiving a signal by using the second chain and the second antenna connected to the second chain, or receiving a signal by using the first chain and the first antenna connected to the first chain and transmitting a signal by using the second chain and the second antenna connected to the second chain.

## Description

### CROSS-REFERENCE TO RELATED APPLICATION

This application claims priority to Chinese Patent Application No. 201210292392.4, filed with the Chinese Patent Office on August 16, 2012 and entitled "COMMUNICATION APPARATUS AND SPACE DIVISION DUPLEX METHOD THEREOF", which is incorporated herein by reference in its entirety.

### TECHNICAL FIELD

The present application relates to the field of communication, and in particular, to a communication apparatus and a space division duplex method thereof.

### BACKGROUND

In a communication system, a node usually needs to have functions of both "listening" and "speaking", to implement duplex communication. In the text, both a working mode, in point-to-point communication, of being capable of implementing data transmission from a node A to a node B and data transmission from the node B to the node A simultaneously and a working mode, in multi-hop communication, of being capable of implementing data transmission from a node A to a node B and data transmission from the node B to a node C simultaneously are referred to as duplex communication.

In order to implement duplex communication, the prior art provides a working mode of space division duplex. One part of antennas of a node are set as transmit antennas and the other part of antennas as receive antennas in a fixed manner, so that transmit channels and receive channels are fully isolated by using spatial isolation among the antennas and a self-interference algorithm, thereby implementing bidirectional data transmission on a same time-frequency resource.

However, in real communication, data transmission features burstiness, asymmetry and unbalancedness. For example, when a user needs to download a movie, transmit antenna resources are insufficient, but receive antennas are in an idle state, and when the user needs to upload a movie, the opposite situation is true, resulting in a waste of antenna resources.

### SUMMARY

A technical problem to be solved mainly by the present application is to provide a communication apparatus and a space division duplex method thereof, which can improve usage efficiency of antennas, thereby improving a throughput of a node.

In order to solve the foregoing technical problem, one aspect of the present application provides a space division duplex method of a communication apparatus, where the communication apparatus includes at least one first chain, at least one second chain, and at least two antennas that are mutually independent of the first chain and the second chain, and the method includes the following steps: obtaining channel state information between the communication apparatus and a peer end; selecting, according to the channel state information and from the antennas, a first antenna corresponding to the first chain and a second antenna corresponding to the second chain; connecting the first chain to the first antenna, and connecting the second chain to the second antenna; and at a same time-frequency resource, transmitting a signal by using the first chain and the first antenna connected to the first chain and receiving a signal by using the second chain and the second antenna connected to the second chain, or receiving a signal by using the first chain and the first antenna connected to the first chain and transmitting a signal by using the second chain and the second antenna connected to the second chain.

All the antennas of the communication apparatus are successively connected to a transmit chain or a receive chain of a first link, to correspondingly send a first reference signal or receive a second reference signal, and a channel measurement feedback generated based on the first reference signal is received or channel estimation is performed based on the second reference signal, to obtain the channel state information of the first link, where the first link is a backhaul link or a receive link; and all the antennas of the communication apparatus are successively connected to a transmit chain or a receive chain of a second link, to correspondingly send a third reference signal or receive a fourth reference signal, and a channel measurement feedback generated based on the third reference signal is received or channel estimation is performed based on the fourth reference signal, to obtain the channel state information of the second link, where the second link is the other link between the backhaul link and the access link except the first link.

The step of successively connecting all the antennas of the communication apparatus to a transmit chain or a receive chain of a first link, to correspondingly send a first reference signal or receive a second reference signal includes: connecting a part of the antennas to the transmit chain or the receive chain of the first link, to correspondingly send the first reference signal or receive the second reference signal; disconnecting the part of the antennas from the transmit chain or the receive chain; and connecting a remaining part of the antennas to the transmit chain or the receive chain of the first link, to correspondingly send the first reference signal or receive the second reference signal.

The step of successively connecting all the antennas of the communication apparatus to a transmit chain or a receive chain of a second link, to correspondingly send a third reference signal or receive a fourth reference signal includes: connecting a part of the antennas to the transmit chain or the receive chain of the second link, to correspondingly send the third reference signal or receive the fourth reference signal; disconnecting the part of the antennas from the transmit chain or the receive chain; and connecting a remaining part of the antennas to the transmit chain or the receive chain of the second link, to correspondingly send the third reference signal or receive the fourth reference signal.

The step of obtaining channel state information between the communication apparatus and a peer end includes: successively connecting all the antennas of the communication apparatus to a transmit chain or a receive chain, to correspondingly send a first reference signal or receive a second reference signal, and receiving a channel measurement feedback generated based on the first reference signal or performing channel estimation based on the second reference signal, to obtain the channel state information between the communication apparatus and the peer end.

The step of successively connecting all the antennas of the communication apparatus to a transmit chain or a receive chain, to correspondingly send a first reference signal or receive a second reference signal includes: connecting a part of the antennas to the transmit chain or the receive chain, to correspondingly send the first reference signal or receive the second reference signal; disconnecting the part of the antennas from the transmit chain or the receive chain; and connecting a remaining part of the antennas to the transmit chain or the receive chain, to correspondingly send the first reference signal or receive the second reference signal.

The step of selecting, according to the channel state information and from the antennas, a first antenna corresponding to the first chain and a second antenna corresponding to the second chain includes: in a criterion of maximizing a system throughput, selecting, according to the channel state information and from the antennas, the first antenna corresponding to the first chain and the second antenna corresponding to the second chain.

After the step of, at a same time-frequency resource, transmitting a signal by using the first chain and the first antenna connected to the first chain and receiving a signal by using the second chain and the second antenna connected to the second chain, or receiving a signal by using the first chain and the first antenna connected to the first chain and transmitting a signal by using the second chain and the second antenna connected to the second chain, the method includes the following step: performing interference cancellation for a baseband signal, an intermediate frequency signal, and a radio frequency signal according to the channel estimation, to suppress a self-interference signal.

In order to solve the foregoing technical problem, another aspect of the present application further provides a communication apparatus, where the communication apparatus includes at least one first chain, at least one second chain, and at least two antennas that are mutually independent of the first chain and the second chain, and the apparatus further includes: an obtaining module, a selecting module, a connecting module and a transmitting and receiving module, where the obtaining module is configured to obtain channel state information between the communication apparatus and a peer end, and the obtaining module sends the channel state information to the selecting module; the selecting module is configured to select, according to the channel state information and from the antennas, a first antenna corresponding to the first chain and a second antenna corresponding to the second chain, and the selecting module sends a selection result to the connecting module; the connecting module is configured to connect the first chain to the first antenna, and connect the second chain to the second antenna; and the transmitting and receiving module is configured to: at a same time-frequency resource, transmit a signal by using the first chain and the first antenna connected to the first chain and receive a signal by using the second chain and the second antenna connected to the second chain, or receive a signal by using the first chain and the first antenna connected to the first chain and transmit a signal by using the second chain and the second antenna connected to the second chain.

The obtaining module is further configured to successively connect all the antennas of the communication apparatus to a transmit chain or a receive chain of a first link, to correspondingly send a first reference signal or receive a second reference signal, and receive a channel measurement feedback generated based on the first reference signal or perform channel estimation based on the second reference signal, to obtain the channel state information of the first link, where the first link is a backhaul link or a receive link; and successively connect all the antennas of the communication apparatus to a transmit chain or a receive chain of a second link, to correspondingly send a third reference signal or receive a fourth reference signal, and receive a channel measurement feedback generated based on the third reference signal or perform channel estimation based on the fourth reference signal, to obtain the channel state information of the second link, where the second link is the other link between the backhaul link and the access link except the first link.

The obtaining module is further configured to connect a part of the antennas to the transmit chain or the receive chain of the first link, to correspondingly send the first reference signal or receive the second reference signal, disconnect the part of the antennas from the transmit chain or the receive chain, and connect a remaining part of the antennas to the transmit chain or the receive chain of the first link, to correspondingly send the first reference signal or receive the second reference signal.

The obtaining module is further configured to connect a part of the antennas to the transmit chain or the receive chain of the second link, to correspondingly send the third reference signal or receive the fourth reference signal, disconnect the part of the antennas from the transmit chain or the receive chain, and connect a remaining part of the antennas to the transmit chain or the receive chain of the second link, to correspondingly send the third reference signal or receive the fourth reference signal.

The obtaining module is further configured to successively connect all the antennas of the communication apparatus to a transmit chain or a receive chain, to correspondingly send a first reference signal or receive a second reference signal, and receive a channel measurement feedback generated based on the first reference signal or perform channel estimation based on the second reference signal, to obtain the channel state information between the communication apparatus and the peer end.

The obtaining module is further configured to connect a part of the antennas to the transmit chain or the receive chain, to correspondingly send the first reference signal or receive the second reference signal, disconnect the part of the antennas from the transmit chain or the receive chain, and connect a remaining part of the antennas to the transmit chain or the receive chain, to correspondingly send the first reference signal or receive the second reference signal.

The selecting module is further configured to: in a criterion of maximizing a system throughput, select, according to the channel state information and from the antennas, the first antenna corresponding to the first chain and the second antenna corresponding to the second chain.

The communication apparatus further includes a self-interference cancellation module, where the self-interference cancellation module receives the channel estimation sent by the obtaining module, and performs interference cancellation for a baseband signal, an intermediate frequency signal, and a radio frequency signal according to the channel estimation, to suppress a self-interference signal.

By understanding state information of each channel, connections between antennas and a transmit chain and a receive chain are reasonably adjusted, so that usage efficiency of the antennas can be improved, thereby improving a throughput of a node.

### BRIEF DESCRIPTION OF DRAWINGS

FIG. 1 is a flowchart of a space division duplex method of an implementation manner of a communication apparatus according to the present application;
FIG. 2 is a schematic structural diagram of an implementation manner of a communication system to which a space division duplex method of a communication apparatus is applicable according to the present application;
FIG. 3 is a flowchart of another implementation manner of a space division duplex method of a communication apparatus according to the present application;
FIG. 4 is a schematic diagram of a relay simultaneously transmitting and receiving data in another implementation manner of a space division duplex method of a communication apparatus according to the present application;
FIG. 5 is a schematic structural diagram of performing self-interference cancellation for a radio frequency signal, an intermediate frequency signal, and a baseband signal in another implementation manner of a space division duplex method of a communication apparatus according to the present application;
FIG. 6 is a schematic structural diagram of another implementation manner of a communication system to which a space division duplex method of a communication apparatus is applicable according to the present application;
FIG. 7 is a flowchart of still another implementation manner of a space division duplex method of a communication apparatus according to the present application;
FIG. 8 is a schematic diagram of a relay simultaneously transmitting and receiving data in still another implementation manner of a space division duplex method of a communication apparatus according to the present application;
FIG. 9 is a schematic structural diagram of an implementation manner of a communication apparatus according to the present application; and
FIG. 10 is a schematic structural diagram of another implementation manner of a communication apparatus according to the present application.

### DESCRIPTION OF IMPLEMENTATION MANNERS

In the following description, specific details such as a specified system architecture, interface, and technology are set forth in an illustrative rather than a restrictive sense, in order to provide a thorough understanding of the present application. However, a person skilled in the art should know that the present application may be practiced in other implementation manners without these specific details. In other instances, well-known apparatuses, circuits, and methods have not been described in detail so as not to unnecessarily obscure aspects of the present application.

The following description is made with reference to the accompanying drawings and specific implementation manners.

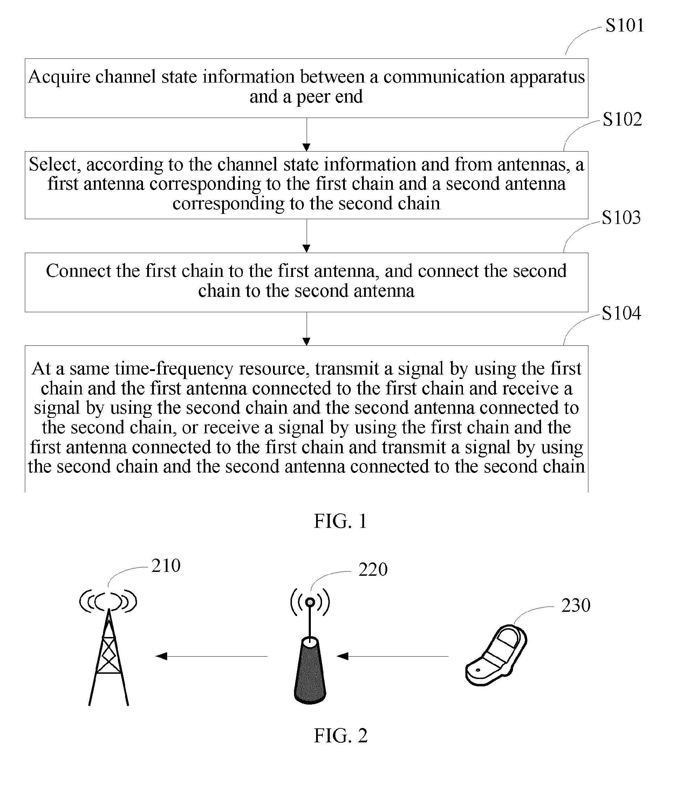

Refer to FIG. 1. FIG. 1 is a flowchart of an implementation manner of a space division duplex method of a communication apparatus according to the present application. The implementation manner of the space division duplex method of the communication apparatus of the present application includes: at least one first chain, at least one second chain, and at least two antennas that are mutually independent of the first chain and the second chain, and the method includes the following steps:
S101: Obtain channel state information between the communication apparatus and a peer end. The peer end is any device that is capable of directly communicating with the communication apparatus, and the number of peer ends may be greater than one. The channel state information is a signal amplitude value or phase value, or the like, which is obtained according to channel estimation.
S102: The communication apparatus selects, according to the channel state information and from the antennas, a first antenna corresponding to the first chain and a second antenna corresponding to the second chain.

The antennas are mutually independent of the first chain and the second chain. That is, a transmit pathway or a receive pathway cannot be directly formed between the antennas and the first chain or the second chain. In a set criterion, the communication apparatus selects, according to the channel state information and from the antennas, the first antenna corresponding to the first chain and the second antenna corresponding to the second chain. The set criterion may be a criterion of maximizing a system throughput or a criterion of maximizing proportional fair, or the like.
S103: The communication apparatus connects the first chain to the first antenna, and connects the second chain to the second antenna.

After the selection, according to a selection result, the communication apparatus connects the first chain to the first antenna, and connects the second chain to the second antenna. When the first chain and the first antenna form a transmit pathway, the second chain and the second antenna form a receive pathway. On the contrary, when the first chain and the first antenna form a receive pathway, the second chain and the second antenna form a transmit pathway.

If the number of selected first chains is greater than one, each of the first chains is connected to one first antenna. Similarly, if the number of selected second chains is greater than one, each of the second chains is connected to one second antenna.
S104: At a same time-frequency resource, the communication apparatus transmits a signal by using the first chain and the first antenna connected to the first chain and receives a signal by using the second chain and the second antenna connected to the second chain, or receives a signal by using the first chain and the first antenna connected to the first chain and transmits a signal by using the second chain and the second antenna connected to the second chain.

After the transmit pathway or the receive pathway is formed, at a same time-frequency resource, the communication apparatus transmits a signal by using the first chain and the first antenna connected to the first chain and receives a signal by using the second chain and the second antenna connected to the second chain, or receives a signal by using the first chain and the first antenna connected to the first chain and transmits a signal by using the second chain and the second antenna connected to the second chain.

By understanding state information of each channel, connections between antennas and a transmit chain and a receive chain are reasonably adjusted, so that usage efficiency of the antennas can be improved, thereby improving a throughput of a node.

Refer to FIG. 2. FIG. 2 is a schematic structural diagram of an implementation manner of a communication system to which a space division duplex method of a communication apparatus is applicable according to the present application. The implementation manner of the communication system includes: a base station 210, a relay 220 and a user terminal 230. The base station 210 and the relay 220 can perform wireless communication with each other, and the relay 220 and the user terminal 230 can perform wireless communication with each other.

A direction from the base station 210 to the user terminal 230 is defined as a downstream direction, and a direction from the user terminal 230 to the base station 210 is defined as an upstream direction. In the downstream direction, the base station 210 first transmits data to the relay 220, and then the relay 220 transmits the data to the user terminal 230, so as to implement multi-hop communication. Further, in the upstream direction, the user terminal 230 first transmits data to the relay 220, and then the relay 220 transmits the data to the base station 210, so as to implement multi-hop communication. A link between the base station 210 and the relay 220 is defined as a backhaul link, and a link between the relay 220 and the user terminal 230 is defined as an access link.

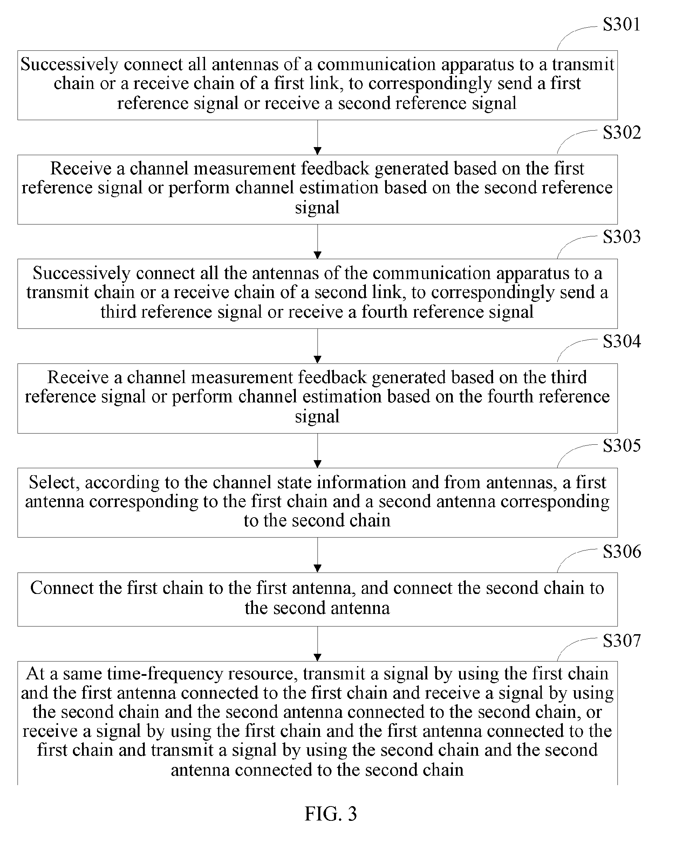

Refer to FIG. 3. FIG. 3 is a flowchart of another implementation manner of a space division duplex method of a communication apparatus according to the present application. The another implementation manner of the space division duplex method of the communication apparatus of the present application is applicable to the communication system shown in FIG. 2. Refer to FIG. 2 as well. The relay 220 is used as the communication apparatus, the base station 210 and the user terminal 230 are used as peer ends, the access link is a first link, and the backhaul link is a second link; and, it is assumed that data is uploaded. The another implementation manner of the space division duplex method of the communication apparatus of the present application includes: at least one first chain, at least one second chain, and at least two antennas that are mutually independent of the first chain and the second chain, and the method includes the following steps:
S301: Successively connect all the antennas of the communication apparatus to a transmit chain or a receive chain of the first link, to correspondingly send a first reference signal or receive a second reference signal.

All the antennas of the relay 220 are successively connected to the transmit chain or the receive chain of the access link. If an antenna is connected to the transmit chain, the first reference signal is transmitted to the user terminal 230 through the transmit chain and the antenna; and if an antenna is connected to the receive chain, the second reference signal from the user terminal 230 is received through the receive chain and the antenna.

The antennas may be connected to the transmit chain or the receive chain of the access link at different moments. That is, a part of the antennas are first connected to the transmit chain or the receive chain, to correspondingly send the first reference signal or receive the second reference signal, then, the part of the antennas are disconnected from the transmit chain or the receive chain, and finally, a remaining part of the antennas are connected to the transmit chain or the receive chain, to correspondingly send the first reference signal or receive the second reference signal.

It is understandable that, the antennas may also be connected to the transmit chain or the receive chain at three or more moments separately, to correspondingly send the first reference signal or receive the second reference signal.
S302: Receive a channel measurement feedback generated based on the first reference signal or perform channel estimation based on the second reference signal.

If the antenna sends the first reference signal to the user terminal 230, the user terminal 230 performs channel estimation according to the first reference signal, and sends the channel measurement feedback, which is obtained according to the channel estimation, to the relay 220. If the antenna receives the second reference signal from the user terminal 230, channel estimation is performed directly according to the received second reference signal.
S303: Successively connect all the antennas of the communication apparatus to a transmit chain or a receive chain of the second link, to correspondingly send a third reference signal or receive a fourth reference signal.

All the antennas of the relay 220 are successively connected to the transmit chain or the receive chain of the backhaul link. If an antenna is connected to the transmit chain, the third reference signal is transmitted to the base station 210 through the transmit chain and the antenna; and if an antenna is connected to the receive chain, the fourth reference signal from the base station 210 is received through the receive chain and the antenna.

The antennas may be connected to the transmit chain or the receive chain of the access link at different moments. That is, a part of the antennas are first connected to the transmit chain or the receive chain, to correspondingly send the third reference signal or receive the fourth reference signal, then, the part of the antennas are disconnected from the transmit chain or the receive chain, and finally, a remaining part of the antennas are connected to the transmit chain or the receive chain, to correspondingly send the third reference signal or receive the fourth reference signal.

It is understandable that, the antennas may also be connected to the transmit chain or the receive chain at three or more moments separately, to correspondingly send the third reference signal or receive the fourth reference signal.
S304: Receive a channel measurement feedback generated based on the third reference signal or perform channel estimation based on the fourth reference signal.

If the antenna sends the third reference signal to the base station 210, the base station 210 performs channel estimation according to the third reference signal, and sends the channel measurement feedback, which is obtained according to the channel estimation, to the relay 220. If the antenna receives the fourth reference signal from the base station 210, channel estimation is performed directly according to the received fourth reference signal.
S305: Select, according to channel state information and from the antennas, a first antenna corresponding to the first chain and a second antenna corresponding to the second chain.

The receive chain of the access link is used as the first chain, and the transmit chain of the backhaul link is used as the second chain. After all channel state information is obtained, in a criterion of maximizing a system throughput, the first antenna corresponding to the first chain and the second antenna corresponding to the second chain are selected from the antennas of the relay 220 according to the channel state information.
S306: Connect the first chain to the first antenna, and connect the second chain to the second antenna.

After the selection, according to a selection result, the relay 220 connects the receive chain of the access link to the first antenna, to form a receive pathway, and connects the transmit chain of the backhaul link to the second antenna, to form a transmit pathway.
S307: At a same time-frequency resource, the communication apparatus transmits a signal by using the first chain and the first antenna connected to the first chain and receives a signal by using the second chain and the second antenna connected to the second chain, or receives a signal by using the first chain and the first antenna connected to the first chain and transmits a signal by using the second chain and the second antenna connected to the second chain.

For example, in this implementation manner, at a same time-frequency resource, a signal is received by using the first chain and the first antenna connected to the first chain, and a signal is transmitted by using the second chain and the second antenna connected to the second chain.

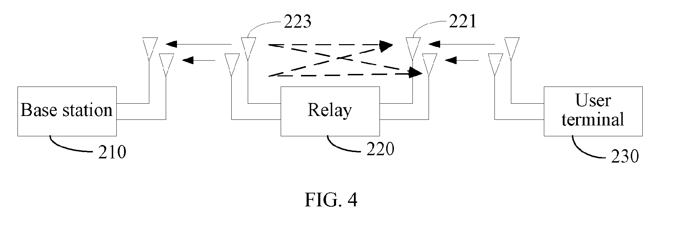

Refer to FIG. 4 as well. After the transmit pathway or the receive pathway is formed, at a same time-frequency resource, the relay 220 receives a signal from the user terminal 230 by using the first chain and a first antenna 221 connected to the first chain, and transmits a signal to the base station 210 by using the second chain and a second antenna 223 connected to the second chain (as shown by solid arrows in FIG. 4).

The backhaul link may also be used as the first link and the access link is used as the second link; in this case, opposite logic is true, and details are not described herein again.

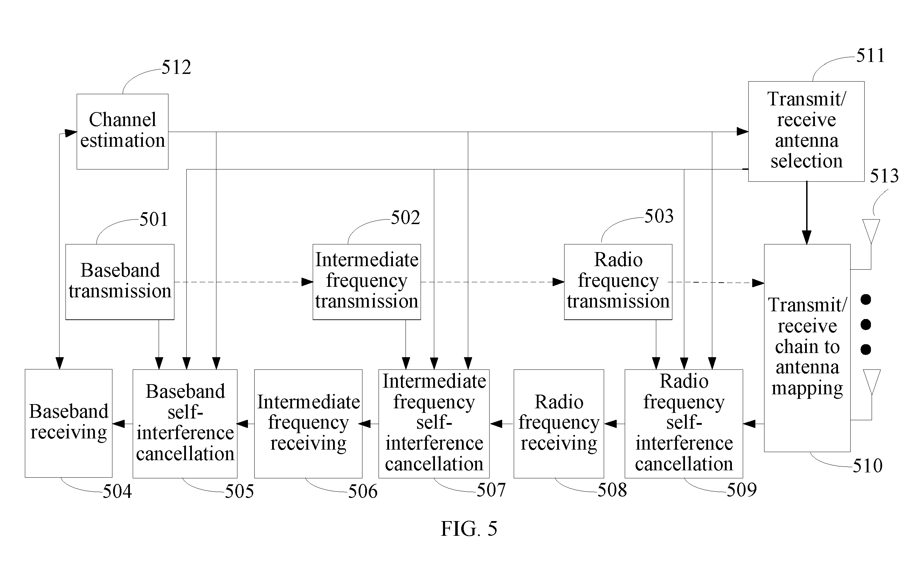

In addition, during signal transmission, the signal transmitted by the second antenna 223 of the relay 220 may also cause self-interference on the first antenna 221 of the relay 220 (as shown by dotted arrows in FIG. 4). Therefore, the communication apparatus may perform interference cancellation for a baseband signal, an intermediate frequency signal, and a radio frequency signal according to the channel estimation, to suppress a self-interference signal. Refer to FIG. 5 for details. If a transmit/receive antenna selecting unit 511 selects an antenna 513 to connect to the receive chain, a radio frequency self-interference cancellation unit 509 is started according to a selection signal, which is sent by the transmit/receive antenna selecting unit 511. The radio frequency self-interference cancellation unit 509 receives a sending radio frequency signal, which is sent by a radio frequency transmitting unit 503, and a channel estimation signal, which is sent by a channel estimation unit 512, and performs interference cancellation for a radio frequency signal, which is from a transmit/receive chain to an antenna mapping unit 510, to suppress a self-interference signal in the radio frequency signal. Then, the radio frequency self-interference cancellation unit 509 sends a radio frequency signal after interference signal cancellation to a radio frequency receiving unit 508. The radio frequency receiving unit 508 converts the radio frequency signal to an intermediate frequency signal, and sends the intermediate frequency signal to an intermediate frequency self-interference cancellation unit 507.

The intermediate frequency self-interference cancellation unit 507 is started according to a selection signal, which is sent by the transmit/receive antenna selecting unit 511. The intermediate frequency self-interference cancellation unit 507 receives a sending intermediate frequency signal, which is sent by an intermediate frequency transmitting unit 502, and a channel estimation signal, which is sent by the channel estimation unit 512, and performs interference cancellation for the intermediate frequency signal, which is from the radio frequency receiving unit 508, to suppress a self-interference signal in the intermediate frequency signal. Then, the intermediate frequency self-interference cancellation unit 507 sends an intermediate frequency signal after interference signal cancellation to an intermediate frequency receiving unit 506. The intermediate frequency receiving unit 506 converts the intermediate frequency signal to a baseband signal, and sends the baseband signal to a baseband self-interference cancellation unit 505.

The baseband self-interference cancellation unit 505 is started according to a selection signal, which is sent by the transmit/receive antenna selecting unit 511. The baseband self-interference cancellation unit 505 receives a sending baseband signal, which is sent by a baseband transmitting unit 501, and a channel estimation signal, which is sent by the channel estimation unit 512, and performs interference cancellation for the baseband signal, which is from the intermediate frequency receiving unit 506, to suppress a self-interference signal in the baseband signal. Then, the baseband self-interference cancellation unit 505 sends a baseband signal after interference signal cancellation to a baseband receiving unit 504.

By understanding state information of each channel of a backhaul link and an access link, connections between antennas and a transmit chain and a receive chain of the backhaul link and the access link are reasonably adjusted, so that multi-hop transmission of a communication apparatus on a same time-frequency resource can be implemented, and usage efficiency of the antennas can be improved, thereby improving a throughput of a node.

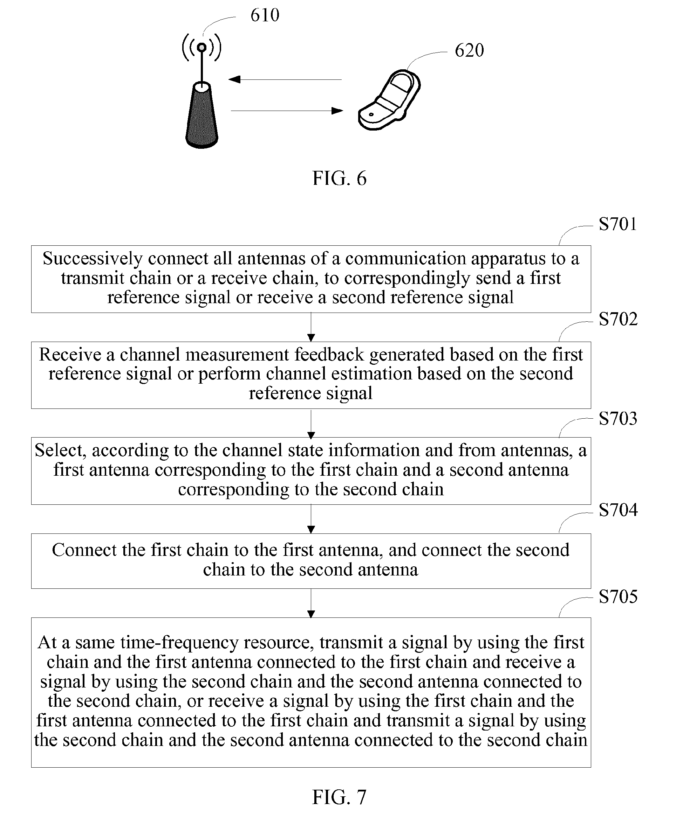

Refer to FIG. 6. FIG. 6 is a schematic structural diagram of another implementation manner of a communication system to which a space division duplex method of a communication apparatus is applicable according to the present application. The another implementation manner of the communication system includes: a relay 610 and a user terminal 620. The relay 610 and the user terminal 620 can perform bidirectional wireless communication with each other. A direction from the relay 610 to the user terminal 620 is defined as a downstream direction, and a direction from the user terminal 620 to the relay 610 is defined as an upstream direction.

Refer to FIG. 7. FIG. 7 is a flowchart of still another implementation manner of a space division duplex method of a communication apparatus according to the present application. The another implementation manner of the space division duplex method of the communication apparatus of the present application is applicable to the communication system shown in FIG. 6. Refer to FIG. 6 as well. The relay 610 is used as the communication apparatus, and the user terminal 620 is used as a peer end. The still another implementation manner of the space division duplex method of the communication apparatus of the present application includes: at least one first chain, at least one second chain, and at least two antennas that are mutually independent of the first chain and the second chain, and the method includes the following steps:
S701: Successively connect all the antennas of the communication apparatus to a transmit chain or a receive chain, to correspondingly send a first reference signal or receive a second reference signal.

All the antennas of the relay 610 are successively connected to the transmit chain or the receive chain. If an antenna is connected to the transmit chain, the first reference signal is transmitted to the user terminal 620 through the transmit chain and the antenna; and if an antenna is connected to the receive chain, the second reference signal from the user terminal 620 is received through the receive chain and the antenna.

The antennas may be connected to the transmit chain or the receive chain at different moments. That is, a part of the antennas are first connected to the transmit chain or the receive chain, to correspondingly send the first reference signal or receive the second reference signal, then, the part of the antennas are disconnected from the transmit chain or the receive chain, and finally, a remaining part of the antennas are connected to the transmit chain or the receive chain, to correspondingly send the first reference signal or receive the second reference signal.

It is understandable that, the antennas may also be connected to the transmit chain or the receive chain at three or more moments separately, to correspondingly send the first reference signal or receive the second reference signal.
S702: Receive a channel measurement feedback generated based on the first reference signal or perform channel estimation based on the second reference signal.

If the antenna sends the first reference signal to the user terminal 620, the user terminal 620 performs channel estimation according to the first reference signal, and sends the channel measurement feedback, which is obtained according to the channel estimation, to the relay 610. If the antenna receives the second reference signal from the user terminal 620, channel estimation is performed directly according to the received second reference signal.
S703: Select, according to channel state information and from the antennas, a first antenna corresponding to the first chain and a second antenna corresponding to the second chain.

The receive chain is used as the first chain, and the transmit chain is used as the second chain. After all channel state information is obtained, in a criterion of maximizing a system throughput, the first antenna corresponding to the first chain and the second antenna corresponding to the second chain are selected from the antennas of the relay 610 according to the channel state information.
S704: Connect the first chain to the first antenna, and connect the second chain to the second antenna.

After the selection, according to a selection result, the relay 610 connects the receive chain to the first antenna, to form a receive pathway, and connects the transmit chain to the second antenna, to form a transmit pathway.
S705: At a same time-frequency resource, transmit a signal by using the first chain and the first antenna connected to the first chain and receive a signal by using the second chain and the second antenna connected to the second chain, or receive a signal by using the first chain and the first antenna connected to the first chain and transmit a signal by using the second chain and the second antenna connected to the second chain.

For example, in this implementation manner, at a same time-frequency resource, a signal is received by using the first chain and the first antenna connected to the first chain, and a signal is transmitted by using the second chain and the second antenna connected to the second chain.

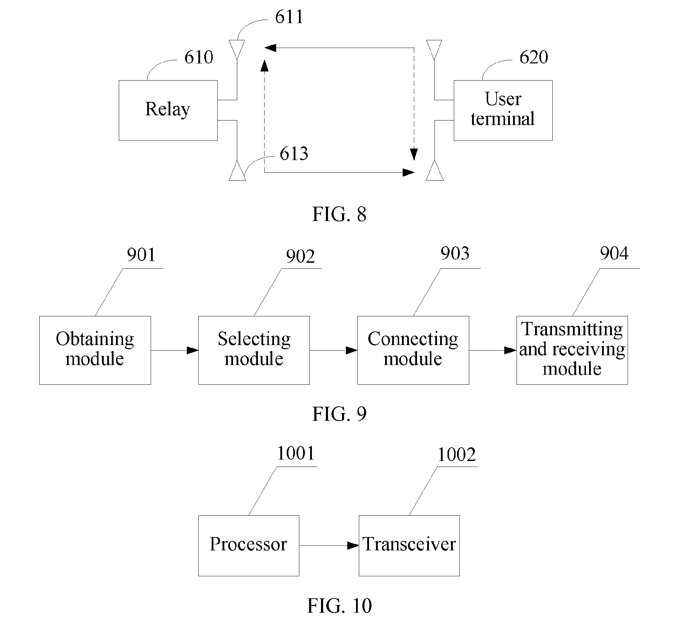

Refer to FIG. 8 as well. After the transmit pathway or the receive pathway is formed, at a same time-frequency resource, the relay 610 receives a signal from the user terminal 620 by using the first chain and the first antenna 221 connected to the first chain, and transmits a signal to the user terminal 620 by using the second chain and the second antenna 223 connected to the second chain (as shown by solid arrows in FIG. 8).

In addition, the signal transmitted by a second antenna 613 of the relay 610 may also cause self-interference on a first antenna 611 of the relay 610 (as shown by dotted arrows in FIG. 8). Therefore, the communication apparatus may perform interference cancellation for a baseband signal, an intermediate frequency signal, and a radio frequency signal according to the channel estimation, to suppress a self-interference signal. Refer to FIG. 5 and relevant descriptions again for details, which are not described herein again.

By understanding state information of each channel between a relay 610 and a user terminal 620, connections between antennas of the relay 610 and a transmit chain and a receive chain are reasonably adjusted, so that duplex communication between the relay 610 and the user terminal 620 on a same time-frequency resource can be implemented, and usage efficiency of the antennas can be improved, thereby improving a throughput of a node.

Refer to FIG. 9. FIG. 9 is a schematic structural diagram of an implementation manner of a communication apparatus according to the present application. The implementation manner of the communication apparatus includes: at least one first chain, at least one second chain, and at least two antennas that are mutually independent of the first chain and the second chain, and the apparatus further includes: an obtaining module 901, a selecting module 902, a connecting module 903 and a transmitting and receiving module 904.

The obtaining module 901 is configured to obtain channel state information between the communication apparatus and a peer end. The peer end is any device that is capable of directly communicating with the communication apparatus, and the number of peer ends may be greater than one. The obtaining module 901 sends the channel state information to the selecting module 902 after obtaining the channel state information.

The selecting module 902 is configured to select, according to the channel state information and from the antennas, a first antenna corresponding to the first chain and a second antenna corresponding to the second chain. For example, in a set criterion of maximizing a system throughput, the selecting module 902 selects, according to the channel state information and from the antennas, the first antenna corresponding to the first chain and the second antenna corresponding to the second chain. In this case, the antennas and the first chain and the second chain are in a state of mutual independence. That is, a transmit pathway or a receive pathway cannot be directly formed between the antennas and the first chain or the second chain. After the selection, the selecting module 902 sends a selection result to the connecting module 903.

The connecting module 903 is configured to connect the first chain to the first antenna, and connect the second chain to the second antenna. For example, according to a selection result, the connecting module 903 connects the first chain to the first antenna, and connects the second chain to the second antenna, and when the first chain and the first antenna form a transmit pathway, the second chain and the second antenna form a receive pathway. On the contrary, when the first chain and the first antenna form a receive pathway, the second chain and the second antenna form a transmit pathway. If the number of selected first chains is greater than one, each of the first chains is connected to one first antenna. Similarly, if the number of selected second chains is greater than one, each of the second chains is connected to one second antenna.

The transmitting and receiving module 904 is configured to: at a same time-frequency resource, transmit a signal by using the first chain and the first antenna connected to the first chain and receive a signal by using the second chain and the second antenna connected to the second chain, or receive a signal by using the first chain and the first antenna connected to the first chain and transmit a signal by using the second chain and the second antenna connected to the second chain. For example, after the transmit pathway or the receive pathway is formed, at a same time-frequency resource, the transmitting and receiving module 904 transmits a signal by using the first chain and the first antenna connected to the first chain and receives a signal by using the second chain and the second antenna connected to the second chain.

By understanding state information of each channel, connections between antennas and a transmit chain and a receive chain are reasonably adjusted, so that usage efficiency of the antennas can be improved, thereby improving a throughput of a node.

Another implementation manner of a communication apparatus of the present application and the communication apparatus shown in FIG. 9 are similar in structure, and a difference lies in that: a link between the communication apparatus and a first peer end is referred to as an access link, and a link between the communication apparatus and a second peer end is referred to as a backhaul link. It is assumed below that the access link is used as a first link, and that the backhaul link is used as a second link.

The obtaining module 901 is further configured to successively connect all the antennas of the communication apparatus to a transmit chain or a receive chain of the access link, to correspondingly send a first reference signal or receive a second reference signal, and receive a channel measurement feedback generated based on the first reference signal or perform channel estimation based on the second reference signal, to obtain the channel state information of the access link; and successively connect all the antennas of the communication apparatus to a transmit chain or a receive chain of the backhaul link, to correspondingly send a third reference signal or receive a fourth reference signal, and receive a channel measurement feedback generated based on the third reference signal or perform channel estimation based on the fourth reference signal, to obtain the channel state information of the backhaul link. For example, if an antenna is connected to the transmit chain, the first reference signal is transmitted to the first peer end through the transmit chain and the antenna; and if an antenna is connected to the receive chain, the second reference signal from the second peer end is received through the receive chain and the antenna. The antennas may be connected to the transmit chain or the receive chain of the access link at different moments. That is, the obtaining module 901 first connects a part of the antennas to the transmit chain or the receive chain, to correspondingly send the first reference signal or receive the second reference signal, then, the obtaining module 901 disconnects the part of the antennas from the transmit chain or the receive chain, and finally, the obtaining module 901 connects a remaining part of the antennas to the transmit chain or the receive chain, to correspondingly send the first reference signal or receive the second reference signal. If the antenna sends the first reference signal to the first peer end, the first peer end performs channel estimation according to the first reference signal, and sends the channel measurement feedback, which is obtained according to the channel estimation, to the communication apparatus. If the antenna receives the second reference signal from the first peer end, channel estimation is performed directly according to the received second reference signal. Then, the obtaining module 901 successively connects all the antennas of the communication apparatus to the transmit chain or the receive chain of the backhaul link. If an antenna is connected to the transmit chain, the third reference signal is transmitted to the second peer end through the transmit chain and the antenna; and if an antenna is connected to the receive chain, the fourth reference signal from the second peer end is received through the receive chain and the antenna. The antennas may be connected to the transmit chain or the receive chain of the access link at different moments. That is, obtaining module 901 first connects a part of the antennas to the transmit chain or the receive chain, to correspondingly send the third reference signal or receive the fourth reference signal, then, the obtaining module 901 disconnects the part of the antennas from the transmit chain or the receive chain, and finally, the obtaining module 901 connects a remaining part of the antennas to the transmit chain or the receive chain, to correspondingly send the third reference signal or receive the fourth reference signal. If the antenna sends the third reference signal to the second peer end, the second peer end performs channel estimation according to the third reference signal, and sends the channel measurement feedback, which is obtained according to the channel estimation, to the communication apparatus. If the antenna receives the fourth reference signal from the second peer end, channel estimation is performed directly according to the received fourth reference signal.

The backhaul link may also be used as the first link and the access link is used as the second link; in this case, opposite logic is true, and details are not described herein again.

It is understandable that, the antennas may also be connected to the transmit chain or the receive chain at three or more moments separately, to correspondingly send the first reference signal or receive the second reference signal, and in another time period, the antennas are connected to the transmit chain or the receive chain at three or more moments separately, to correspondingly send the third reference signal or receive the fourth reference signal.

The selecting module 902 is further configured to: in a criterion of maximizing a system throughput, select, according to the channel state information and from the antennas, a first antenna corresponding to the first chain and a second antenna corresponding to the second chain.

In addition, during signal transmission, the transmitted signal of the communication apparatus may affect the received signal. Therefore, the communication apparatus further includes a self-interference cancellation module, which is configured to perform interference cancellation for a baseband signal, an intermediate frequency signal, and a radio frequency signal according to the channel estimation, to suppress a self-interference signal. Refer to FIG. 5 and relevant descriptions for details, which are not described herein again.

By understanding state information of each channel of a backhaul link and an access link, connections between antennas and a transmit chain and a receive chain of the backhaul link and the access link are reasonably adjusted, so that multi-hop transmission of a communication apparatus on a same time-frequency resource can be implemented, and usage efficiency of the antennas can be improved, thereby improving a throughput of a node.

Still another implementation manner of a communication apparatus of the present application and the communication apparatus shown in FIG. 9 are similar in structure, and a difference lies in the following:

The obtaining module 901 is further configured to successively connect all the antennas of the communication apparatus to a transmit chain or a receive chain. For example, if an antenna is connected to the transmit chain, the first reference signal is transmitted to a peer end through the transmit chain and the antenna; and if an antenna is connected to the receive chain, the second reference signal from the peer end is received through the receive chain and the antenna. The antennas may be connected to the transmit chain or the receive chain at different moments. That is, the obtaining module 901 first connects a part of the antennas to the transmit chain or the receive chain, to correspondingly send the first reference signal or receive the second reference signal, then, the obtaining module 901 disconnects the part of the antennas from the transmit chain or the receive chain, and finally, the obtaining module 901 connects a remaining part of the antennas to the transmit chain or the receive chain, to correspondingly send the first reference signal or receive the second reference signal.

It is understandable that, the antennas may also be connected to the transmit chain or the receive chain at three or more moments separately, to correspondingly send the first reference signal or receive the second reference signal.

Further, the selecting module 902 is further configured to: in a criterion of maximizing a system throughput, select, according to the channel state information and from the antennas, a first antenna corresponding to the first chain and a second antenna corresponding to the second chain.

In addition, during signal transmission, the transmitted signal of the communication apparatus may affect the received signal. Therefore, the communication apparatus further includes a self-interference cancellation module, which is configured to perform interference cancellation for a baseband signal, an intermediate frequency signal, and a radio frequency signal according to the channel estimation, to suppress a self-interference signal. Refer to FIG. 5 and relevant descriptions for details, which are not described herein again.

By understanding state information of each channel between a communication apparatus and a peer end, connections between antennas of the communication apparatus and a transmit chain and a receive chain are reasonably adjusted, so that duplex communication between the communication apparatus and the peer end on a same time-frequency resource can be implemented, and usage efficiency of the antennas can be improved, thereby improving a throughput of a node.

Refer to FIG. 10. FIG. 10 is a schematic structural diagram of another implementation manner of a communication apparatus according to the present application. The another implementation manner of the communication apparatus includes: at least one first chain, at least one second chain, and at least two antennas that are mutually independent of the first chain and the second chain, and the communication apparatus further includes: a processor 1001 and a transceiver 1002.

The processor 1001 is configured to obtain channel state information between the communication apparatus and a peer end, select, according to the channel state information and from the antennas, a first antenna corresponding to the first chain and a second antenna corresponding to the second chain, and connect the first chain to the first antenna, and connect the second chain to the second antenna. For example, the processor 1001 obtains the channel state information, which is obtained via a test, between the communication apparatus and the peer end, and then, in a set criterion, the processor 1001 selects, according to the channel state information and from the antennas, the first antenna corresponding to the first chain and the second antenna corresponding to the second chain. After the selection, according to a selection result, the processor 1001 connects the first chain to the first antenna, and connects the second chain to the second antenna, and when the first chain and the first antenna form a transmit pathway, the second chain and the second antenna form a receive pathway. On the contrary, when the first chain and the first antenna form a receive pathway, the second chain and the second antenna form a transmit pathway. If the number of selected first chains is greater than one, each of the first chains is connected to one first antenna. Similarly, if the number of selected second chains is greater than one, each of the second chains is connected to one second antenna.

The transceiver 1002 is configured to: at a same time-frequency resource, transmit a signal by using the first chain and the first antenna connected to the first chain and receive a signal by using the second chain and the second antenna connected to the second chain, or receive a signal by using the first chain and the first antenna connected to the first chain and transmit a signal by using the second chain and the second antenna connected to the second chain. For example, after the transmit pathway or the receive pathway is formed, at a same time-frequency resource, the transceiver 1002 transmits a signal by using the first chain and the first antenna connected to the first chain and receives a signal by using the second chain and the second antenna connected to the second chain.

By understanding state information of each channel, connections between antennas and a transmit chain and a receive chain are reasonably adjusted, so that usage efficiency of the antennas can be improved, thereby improving a throughput of a node.

In the several implementation manners provided in the present application, it should be understood that the disclosed system, apparatus, and method may be implemented in other manners. For example, the described apparatus implementation manner is merely exemplary. For example, the module or unit division is merely logical function division and there may be other division in an actual implementation. For example, a plurality of units or components may be combined or integrated into another system, or some features may be ignored or not performed. Furthermore, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected according to an actual need to achieve the objectives of the solutions of the implementation manners.

In addition, functional units in the implementation manners of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the implementation manners of the present application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A space division duplex method of a communication apparatus, wherein the communication apparatus comprises at least one first chain, at least one second chain, and at least two antennas that are mutually independent of the first chain and the second chain, and the method comprises the following steps:
obtaining channel state information between the communication apparatus and a peer end;
selecting, according to the channel state information and from the antennas, a first antenna corresponding to the first chain and a second antenna corresponding to the second chain;
connecting the first chain to the first antenna, and connecting the second chain to the second antenna; and
at a same time-frequency resource, transmitting a signal by using the first chain and the first antenna connected to the first chain and receiving a signal by using the second chain and the second antenna connected to the second chain, or receiving a signal by using the first chain and the first antenna connected to the first chain and transmitting a signal by using the second chain and the second antenna connected to the second chain.

2. The method according to claim 1, wherein the step of obtaining channel state information between the communication apparatus and a peer end comprises:
successively connecting all the antennas of the communication apparatus to a transmit chain or a receive chain of a first link, to correspondingly send a first reference signal or receive a second reference signal, and receiving a channel measurement feedback generated based on the first reference signal or performing channel estimation based on the second reference signal, to obtain the channel state information of the first link, wherein the first link is a backhaul link or a receive link; and
successively connecting all the antennas of the communication apparatus to a transmit chain or a receive chain of a second link, to correspondingly send a third reference signal or receive a fourth reference signal, and receiving a channel measurement feedback generated based on the third reference signal or performing channel estimation based on the fourth reference signal, to obtain the channel state information of the second link, wherein the second link is the other link between the backhaul link and the access link except the first link.

3. The method according to claim 2, wherein the step of successively connecting all the antennas of the communication apparatus to a transmit chain or a receive chain of a first link, to correspondingly send a first reference signal or receive a second reference signal comprises:
connecting a part of the antennas to the transmit chain or the receive chain of the first link, to correspondingly send the first reference signal or receive the second reference signal;
disconnecting the part of the antennas from the transmit chain or the receive chain; and
connecting a remaining part of the antennas to the transmit chain or the receive chain of the first link, to correspondingly send the first reference signal or receive the second reference signal.

4. The method according to claim 2, wherein the step of successively connecting all the antennas of the communication apparatus to a transmit chain or a receive chain of a second link, to correspondingly send a third reference signal or receive a fourth reference signal comprises:
connecting a part of the antennas to the transmit chain or the receive chain of the second link, to correspondingly send the third reference signal or receive the fourth reference signal;
disconnecting the part of the antennas from the transmit chain or the receive chain; and
connecting a remaining part of the antennas to the transmit chain or the receive chain of the second link, to correspondingly send the third reference signal or receive the fourth reference signal.

5. The method according to claim 1, wherein the step of obtaining channel state information between the communication apparatus and a peer end comprises:
successively connecting all the antennas of the communication apparatus to a transmit chain or a receive chain, to correspondingly send a first reference signal or receive a second reference signal, and receiving a channel measurement feedback generated based on the first reference signal or performing channel estimation based on the second reference signal, to obtain the channel state information between the communication apparatus and the peer end.

6. The method according to claim 5, wherein the successively connecting all the antennas of the communication apparatus to a transmit chain or a receive chain, to correspondingly send a first reference signal or receive a second reference signal comprises:
connecting a part of the antennas to the transmit chain or the receive chain, to correspondingly send the first reference signal or receive the second reference signal;
disconnecting the part of the antennas from the transmit chain or the receive chain; and
connecting a remaining part of the antennas to the transmit chain or the receive chain, to correspondingly send the first reference signal or receive the second reference signal.

7. The method according to claim 1, wherein the step of selecting, according to the channel state information and from the antennas, a first antenna corresponding to the first chain and a second antenna corresponding to the second chain comprises:
in a criterion of maximizing a system throughput, selecting, according to the channel state information and from the antennas, the first antenna corresponding to the first chain and the second antenna corresponding to the second chain.

8. The method according to claim 1, wherein after the step of, at a same time-frequency resource, transmitting a signal by using the first chain and the first antenna connected to the first chain and receiving a signal by using the second chain and the second antenna connected to the second chain, or receiving a signal by using the first chain and the first antenna connected to the first chain and transmitting a signal by using the second chain and the second antenna connected to the second chain, the method comprises the following step:
performing interference cancellation for a baseband signal, an intermediate frequency signal, and a radio frequency signal according to channel estimation, to suppress a self-interference signal.

9. A communication apparatus, wherein the communication apparatus comprises at least one first chain, at least one second chain, and at least two antennas that are mutually independent of the first chain and the second chain, and the apparatus further comprises: an obtaining module, a selecting module, a connecting module and a transmitting and receiving module;
the obtaining module is configured to obtain channel state information between the communication apparatus and a peer end, and the obtaining module sends the channel state information to the selecting module;
the selecting module is configured to select, according to the channel state information and from the antennas, a first antenna corresponding to the first chain and a second antenna corresponding to the second chain, and the selecting module sends a selection result to the connecting module;
the connecting module is configured to connect the first chain to the first antenna, and connect the second chain to the second antenna; and
the transmitting and receiving module is configured to: at a same time-frequency resource, transmit a signal by using the first chain and the first antenna connected to the first chain and receive a signal by using the second chain and the second antenna connected to the second chain, or receive a signal by using the first chain and the first antenna connected to the first chain and transmit a signal by using the second chain and the second antenna connected to the second chain.

10. The communication apparatus according to claim 9, wherein the obtaining module is further configured to successively connect all the antennas of the communication apparatus to a transmit chain or a receive chain of a first link, to correspondingly send a first reference signal or receive a second reference signal, and receive a channel measurement feedback generated based on the first reference signal or perform channel estimation based on the second reference signal, to obtain the channel state information of the first link, wherein the first link is a backhaul link or a receive link; and successively connect all the antennas of the communication apparatus to a transmit chain or a receive chain of a second link, to correspondingly send a third reference signal or receive a fourth reference signal, and receive a channel measurement feedback generated based on the third reference signal or perform channel estimation based on the fourth reference signal, to obtain the channel state information of the second link, wherein the second link is the other link between the backhaul link and the access link except the first link.

11. The communication apparatus according to claim 10, wherein the obtaining module is further configured to connect a part of the antennas to the transmit chain or the receive chain of the first link, to correspondingly send the first reference signal or receive the second reference signal, disconnect the part of the antennas from the transmit chain or the receive chain, and connect a remaining part of the antennas to the transmit chain or the receive chain of the first link, to correspondingly send the first reference signal or receive the second reference signal.

12. The communication apparatus according to claim 10, wherein the obtaining module is further configured to connect a part of the antennas to the transmit chain or the receive chain of the second link, to correspondingly send the third reference signal or receive the fourth reference signal, disconnect the part of the antennas from the transmit chain or the receive chain, and connect a remaining part of the antennas to the transmit chain or the receive chain of the second link, to correspondingly send the third reference signal or receive the fourth reference signal.

13. The communication apparatus according to claim 9, wherein the obtaining module is further configured to successively connect all the antennas of the communication apparatus to a transmit chain or a receive chain, to correspondingly send a first reference signal or receive a second reference signal, and receive a channel measurement feedback generated based on the first reference signal or perform channel estimation based on the second reference signal, to obtain the channel state information between the communication apparatus and the peer end.

14. The communication apparatus according to claim 10, wherein the obtaining module is further configured to connect a part of the antennas to the transmit chain or the receive chain, to correspondingly send the first reference signal or receive the second reference signal, disconnect the part of the antennas from the transmit chain or the receive chain, and connect a remaining part of the antennas to the transmit chain or the receive chain, to correspondingly send the first reference signal or receive the second reference signal.

15. The communication apparatus according to claim 9, wherein the selecting module is further configured to: in a criterion of maximizing a system throughput, select, according to the channel state information and from the antennas, the first antenna corresponding to the first chain and the second antenna corresponding to the second chain.

16. The communication apparatus according to claim 9, wherein the communication apparatus further comprises a self-interference cancellation module, wherein the self-interference cancellation module receives channel estimation sent by the obtaining module, and performs interference cancellation for a baseband signal, an intermediate frequency signal, and a radio frequency signal according to the channel estimation, to suppress a self-interference signal.
